# EUROPEAN PATENT APPLICATION

(11) **EP 4 074 188 A1**
(43) Date of publication of application: **19.10.2022**
(21) Application number: 21305497.6
(22) Date of filing: 15.04.2021
(51) Int. Cl.: A23L 2/56, A23F 3/16, A23F 3/34, A23L 2/38, A23L 2/385, A23L 2/42, A23L 2/54

(54) **A PROCESS OF PREPARING A BEVERAGE WITH NATURAL PLANT INFUSIONS**

(71) Applicant: Compagnie Gervais Danone, 75009 Paris (FR)
(72) Inventor: LAMENCA, Thierry, 91450 Soisy sur Seine (FR); SECHET, Barbara, 92210 Saint-Cloud (FR)
(74) Representative: Novagraaf Technologies

(57) **Abstract**

The invention concerns a process for preparing a beverage comprising plant extracts. The process involves infusions as plant extracts components and enhances naturality.

## Description

The invention concerns a process for preparing a beverage comprising plant extracts. The process involves infusions as plant extracts components and enhances naturality.

Beverages comprising plants extracts are known. Examples comprise cold tea beverages, packaged in a container. Such beverages are typically prepared by adding powered or liquid concentrated ingredients, for example a tea powder. This involves several processing steps, such as a plant component treatment to obtain a plant extract, then a concentration of the extract to obtain an ingredient, and then a mixing with water to obtain the beverage.

Such processing steps can be perceived as lowering the naturality of the plant extract. There is a need for processes that are more natural and/or perceived as more natural by consumers. In particular there is a need for processes avoiding the use of solvents and/or for processes exposing the plant component to mild, less chemical, treatments.

Such processing steps can also modify the taste associated to the plant, for example by removing some extracted molecules during concentration. There is a need for processes allowing to preserve in beverages as much molecules obtained from the plant as possible.

Infusion in water is a known extraction process, perceived as quite natural. Infusions are usually performed in hot conditions, for example in hot water, to allow a most complete and/or fast transfer of molecules from a plant substrate to an aqueous infusion medium. Such processes however require a significant energy consumption. Moreover, hot conditions can enhance the extraction of molecules having undesired taste, such as tannins for example, and/or modify some molecules, generating some undesired taste. There is a need for different processes, requiring less energy consumption and/or providing a gentle management of the plant component and molecules.

Infusions in water in cold conditions are also known. They can ensure a gentle management of the plant components. However, they require extensive treatment times. There is a need for more efficient processes.

Infusions in water in presence of ultrasounds have been described as extracts preparation process. It has been described for example to infuse lemon peels in an aqueous medium to obtain a liquid infusion mixture, then to separate the lemon peels from the liquid infusion mixture, then to further separate and concentrate some molecules from the infusion mixture, to be used for various purposes, for example as pharmaceutical or cosmetic products. The further separation and concentration involve complex steps with further use of products such as solvents and columns, and/or involve significant energy consumption. Additionally, the further separation and concentration modify the taste associated to the plant. There is a need for processes allowing to preserve in beverages as much molecules obtained from the plant as possible. There is a need for processes that are simpler, that are more economic, and/or that can be perceived as more natural, for example better protecting components and molecules coming from the plants.

The invention addresses at least one of needs or problems mentioned above with a process of preparing a beverage with natural plant extracts, comprising the steps of:
step a) preparing at least one plant infusion intermediate composition by a process comprising the steps of:
   step a1) infusing a plant component substrate with an infusion water,
      - at a temperature of up to 40 °C, preferably up to 25°C,
      - at a weight ratio between the plant component and water of from 5/95 to 40/60,
      - in presence of ultrasounds,
      to obtain a plant infusion composition comprising the infusion water and plant extracted compounds, and the resulting plant component substrate,
   step a2) separating the plant infusion composition from the resulting plant component substrate, and
   step a3) optionally re-iterating steps a1) and a2) with fresh substrate and the plant infusion composition as infusion water,
   step a4) optionally concentrating the plant infusion composition, with the proviso that the amount by weight of plant extracted compounds is of lower than 10%, preferably lower than 5%,
      to recover plant infusion intermediate composition,
   step a5) optionally treating the plant infusion intermediate composition against pathogens,
step b) mixing the at least one plant infusion intermediate composition with an optionally carbonated water matrix and optionally additives different from the plant infusion intermediate composition, and optionally carbonating, to obtain an optionally carbonated beverage, and Step c) packaging the beverage in a sealed container.

The invention also concerns the beverage obtainable or obtained by the process. The invention also concerns the use of the infusions obtainable or obtained by step a), to prepare beverages. The invention also concerns the process of using the beverages, by orally consuming it, for example by drinking.

### Plant infusion intermediate composition and preparation (step a))

The process comprises a step of preparing at least one plant infusion intermediate composition (step a)). The plant infusion intermediate composition is then mixed or otherwise formulated with other components or ingredients of the beverage. The plant infusion intermediate composition provides a natural plant extract to the beverage. The plant infusion is obtained by a process comprising steps a1) to a4) or a5). Accordingly, it comprises compounds extracted form a plant component substrate (herein "plant extracted compounds") and a significant amount of water (herein "infusion water"), typically at least 90% by weight, preferably at least 95%. The amount of plant extracted compounds in the plant infusion intermediate composition is typically of at most 10% by weigh, preferably at most 5%. The plant infusion intermediate composition is thus different from a concentrated or extracted ingredient typically used in beverages formulations.

In one embodiment several plant infusion intermediate compositions are independently prepared and further mixed or formulated in further steps. In one embodiment the several infusion intermediate compositions are different and prepared from several different plant component substrates. For example, one, two, three, four or even more infusion intermediate compositions from different plant component substrate are prepared and mixed or formulated in further steps.

### Plant substrates

The process involves infusing at least one plant component substrate, to obtain plant extracted compounds. The plant component substrate is a solid.

The plant component substrate can be any component from any plant. It can be a full plant, or a component of a plant. The plant component can be for example a leaf, a root, a fruit, a vegetable, a berry or bean, a herb, a flower, or a component thereof; or a mixture or association of such component, attached (for example stem and leaf together) or detached.

Examples of plant components include tea leaves, mint leaves, stevia leaves, coffee beans, whole fruits or fruit peels or pilled fruit, whole vegetable or vegetable peels or pilled vegetable, and their mixtures or associations.

The plant components used can be introduced in the process in various forms, such as fresh, frozen, canned, dried, or freeze-dried forms. They can be introduced in whole component forms or in pieces or powder forms.

Examples of fruits include acerola, apple, apricot, bilberry, blackberry, blackcurrant, blueberry, cherry, clementine, cloudberry, cranberry, date, dragonberry, elderberry, fig, gooseberry, grape, grapefruit, greengage, guava, kiwi fruit, kumquat, lemon, lime, loganberry, lychee, mandarin, mango, medlar, melon, mulberry, nectarine, orange, papaya, passion fruit, paw paw, peach, pear, physalis, pineapple, plum, pomegranate, quince, redcurrant, raspberry, rhubarb, strawberry, tangerine, watermelon, and mixtures or associations thereof.

Examples of fruits or fruit peels include citrus or citrus peels. Citrus herein refers to fruit from a plant belonging to the genus Citrus.

Examples of vegetables include cabbage, Brussels sprouts, cauliflower, broccoli, kale, kohlrabi, red cabbage, Savoy cabbage, Chinese broccoli, collard greens, turnip, Chinese cabbage, napa cabbage, bok choy, radish, daikon, seedpod, carrot, parsnip, beetroot, sea beet, Swiss chard, sugar beet, lettuce, celtuce, green bean, French bean, runner bean, haricot bean, Lima bean, broad bean, pea, snap pea, snow pea, split pea, potato, eggplant, tomato, cucumber, pumpkin, squash, marrow, zucchini, gourd, onion, spring onion, scallion, shallot, garlic, leek, elephant garlic, pepper, bell pepper, sweet pepper, spinach, yam, sweet potato, cassava, and mixtures or associations thereof.

Examples of herbs include culinary herbs such as thyme, sage, lavender, parsley, basil. Rosemary, dill, coriander and mixtures or associations thereof.

Examples of plant leaves include tea, laurel, mint, anise, chamomile, coca coffee-leaf, elderberry, rooibos, hydrangea, fireweed kratom, neem, nettle, olive, pennyroyal, red raspberry, stevia, verbena and mixtures or associations thereof.

It is mentioned that tea leaves herein refers to leaves optionally with stem of the plant Camellia sinensis var. sinensis and/or Camellia sinensis var. assamica.

It is mentioned that stevia leaves herein refers to leaves optionally with stem of the plant Stevia rebaudiana.

Examples of berries or beans include coffee, goji, cocoa, fava bean, mung, pea, chickpea, lentil, soybean, lupin, and mixtures or associations thereof.

Example of roots include ginger, ginseng, licorice and mixtures or associations thereof.

### Infusion with ultrasounds (step a1))

Step a1) involves infusing a plant component substrate with an infusion water,
- at a temperature of up to 40 °C, preferably up to 25°C,
- at a weight ratio between the plant component and water of from 5/95 to 40/60,
- in presence of ultrasounds,
to obtain a plant infusion composition comprising the infusion water and plant extracted compounds, and the resulting plant component substrate.

During this infusion step some compounds comprised in the plant component substrate are extracted and transferred in the infusion water. In the infusion water this compound may be present as solution, emulsion and/or dispersion. The plant component substrate is depleted from these extracted compounds and is referred to as resulting plant component substrate.

The infusion water can be tap water, spring water or natural mineral water. The infusion water is preferably still, non-carbonated water. In one embodiment the infusion water is a mineral water having a minerals concentration of from 100 mg/L to 2500 mg/L.

Infusing is carried out my mixing or otherwise contacting the plant component substrate with water, herein referred to as infusion water. This can be done according to a continuous or batch process, for example in a tank. The mixture is optionally agitated.

The weight ratio between the plant component and water is of from 5/95 to 40/60. It may be adjusted according to the plant component and/or its form. The ratio can be for example of from 5/95 to 10/90 or from 10/90 to 20/80 or from 20/80 to 30/70 or from 30/70 to 40/60.

In one embodiment the temperature in step a1) is of at least 5°C, preferably at least 10°C. In one embodiment the from temperature in step a1) is of 5°C to 25°C, preferably from 10°C to 20°C.

The infusion is carried out in presence of ultrasounds. These are typically applied up to having released an amount of energy, for example expressed in Watts x seconds (Ws) to the amount of plant component substrate that is used. Ultrasounds application is known by the one skilled in the art. Equipment are commercially available. In one embodiment the ultrasounds are applied by introducing a sonotrode into the mixture of substrate and infusion water. It is mentioned that several sonotrodes can be introduced.

In one embodiment the ultrasounds are applied with a frequency of from 18 to 30 kHz, and a power of from 100 W to 16000 W. In one embodiment the ultrasounds are applied with an energy of from 10 Ws to 100 Ws per gram of mixture of substrate and infusion water.

In one embodiment:
- the substrate is tea leaves, and
- the ultrasounds are applied with an energy of from 15 Ws to 70 Ws per gram of mixture of substrate and infusion water

In one embodiment:
- the substrate is mint leaves, and
- the ultrasounds are applied with an energy of from 10 Ws to 40 Ws per gram of mixture of substrate and infusion water.

In one embodiment:
- the substrate is raspberries or strawberries, and
- the ultrasounds are applied with an energy of from 25 Ws to 60 Ws per gram of mixture of substrate and infusion water.

In one embodiment:
- the substrate is peeled apples pieces, and
- the ultrasounds are applied with an energy of from 30 Ws to 70 Ws per gram of mixture of substrate and infusion water.

In one embodiment:
- the substrate is lemon peels, and
- the ultrasounds are applied with an energy of from 20 Ws to 60 Ws per gram of mixture of substrate and infusion water.

### Separation (step a2))

After the infusion the resulting plant component substrate, depleted in extracted compound, is separated for the plant infusion composition comprising the infusion water with the extracted compounds. The separation is typically a physical separation allowing to remove the resulting plant composition substrate solids, for example in pieces. It can be carried out by conventional technics such as sieving, filtration, centrifugation or the like.

### Optional additional passes

It is mentioned that the infusion can be carried out with several extractions passes. In such an embodiment a plant infusion composition, comprising the infusion water with the extracted compounds, is further concentrated in extracted compounds by adding some fresh substrate, and further infusing according to the process of step a1). The addition can be performed before or after the separation.

In an embodiment the process comprises an optional step a3) of re-iterating steps a1) and a2) with fresh substrate and the plant infusion composition as infusion water.

Additional passes can be useful to increase the concentration of plant extracted compounds and allow a most efficient delivery of these compounds to the beverage upon mixing or formulating in subsequent steps.

In one embodiment the amount by weight in the plant infusion intermediate composition of plant extracted compounds after one infusion passe or after all several infusion passes is of lower than 10%, preferably lower than 5%.

### Optional concentration

The plant infusion composition can be, in an optional step a4), moderately concentrated. This can be useful to increase the concentration of plant extracted compounds and allow a more efficient delivery of these compounds to the beverage upon mixing or formulating in subsequent steps. The concentration can be performed by removing some to the water, for example by moderate evaporation. If a concentration step is performed, the amount by weight in the plant infusion intermediate composition, after concentration, of plant extracted compounds is of lower than 10%, preferably lower than 5%. The concentration moderation allows avoiding some loss or transformation of the extracted compounds and keeping the composition of the extracted compounds as close as possible to a natural composition.

The composition after the infusion, separation, optional additional passes and optional concentration is recovered for further use in the process. It is referred to as the plant infusion intermediate composition when used in further steps of the process.

### Optional treatment against pathogens (step a5)

In one embodiment the plant infusion intermediate composition is treated against pathogens development. Such treatments can be performed by know technics such as pasteurization, sterilization, aseptic treatments, UV treatments, acidification or the like. Such treatments are especially suitable it the plant infusion intermediate composition is to be stored and/or transported before further steps or mixing or formulating, to obtain the beverage.

### Beverage and preparation (step b))

The process comprises a step b) of preparing the beverage with the at least one plant infusion intermediate composition. In this step the at least one plant infusion intermediate composition is mixed with an optionally carbonated water matrix and optionally additives different from the plant infusion intermediate composition, the mixture is optionally carbonated, to obtain an optionally carbonated beverage. The step is also referred to as a formulation step.

In one embodiment the mixing of step b) is a direct mixing of the plant infusion intermediate composition, optionally after storage and/or transportation. By direct mixing it is meant that the plant infusion intermediate composition is mixed as is, without preliminary or further steps of extraction, concentration or other transformations. Accordingly, the process does not involve, for the plant of the infusion, any concentrated ingredient; that can be perceived as artificial or over-processed, and/or that modify the natural taste associated to the plant.

In one embodiment the beverage comprises several plant extracts, and step b) comprises preparing several plant infusion intermediate compositions obtained according the process of step a) and mixing them with the water matrix and optional additives according to step b).

In one embodiment the plant used in step a), or the plant infusion thereof, is labelled as a prominent ingredient or flavor on the packaging of the beverage. Some additives are optionally labeled as less prominent ingredients or flavors, for example solely in an ingredient list. In one embodiment all prominently labelled plants are plants used in step a) and mixed in step b). Example of prominent ingredients are tea, coffee, fruits or peels, roots, herbs, flowers or vegetables or peels. Examples are listed above. These are typically instantly recognized by consumers on shelves or websites, as a major feature of the beverage.

The water matrix used to prepare the beverage can be tap water, purified water, spring water or natural mineral water. The water matrix can still water. The water matrix can be carbonated water, for example a carbonated tap water, a carbonated purified water, a carbonate spring water or a carbonated natural mineral water. In one embodiment the infusion water is a mineral water; for example a still or sparkling mineral water, having a minerals concentration of from 100 mg/L to 2500 mg/L.

In one embodiment:
- the infusion water is a mineral water having a minerals concentration of from 100 mg/L to 2500 mg/L, and
- the water matrix is a mineral water having a minerals concentration of from 100 mg/L to 2500 mg/L.

In one embodiment the infusion water and the water matrix are identical. This enhances the naturality or the perception thereof.

In one embodiment the mixing of step b) is performed at a weight ratio between the plant infusion intermediate composition and the water matrix of from 2/98 to 30/70, for example from 2/98 to 5/95, or from 5/95 to 10/90, or from 10/90 to 15/85, or from 15/85 to 20/80, or from 20/80 to 25/75, or from 25/75 to 30/70.

### Additives

The beverage can comprise additives. Herein additives refer to ingredients, composition of matter or molecules in any case different from the plant infusion intermediate composition.

Examples of additives include sugar ingredients, sweeteners, flavors, flavor modifiers, making agents, acidity modification agents, color modification agents, preservation agents, and mixtures or associations thereof. The additives are know be the one skilled in the art.

Sugar ingredients are ingredients based on sucrose. Examples include sucrose, refined sugar, such as beetroot sugar, cane sugar, isomerized liquid sugars such as high fructose syrups such as higher fructose corn or starch syrup (HFCS HFSS), and their mixtures or associations.

Sweeteners are ingredients delivering sweetness, different from sugar ingredients. These usually have lower caloric value than sugar. They can be non-caloric. Examples of sweeteners include steviol glycosides such as stevioside, rebaudioside A, rebaudioside D, rebaudioside E, rebaudioside M, Monatin and its salts, Mogroside IV, Mogroside V, brazzein, thaumatin, D-allose, D-psicose, L- ribose, D-tagatose, L-glucose, L-fucose, L-arabinose, D-turanose, brazzein, fructose, glucose, erythritol, maltitol, lactitol, sorbitol, mannitol, xylitol, tagatose, trehalose, galactose, rhamnose, cyclodextrin (e.g., a-cyclodextrin, β-cyclodextrin, and γ-cyclodextrin), ribulose, threose, arabinose, xylose, lyxose, allose, altrose, mannose, idose, lactose, maltose, invert sugar, isotrehalose, neotrehalose, palatinose or isomaltulose, erythrose, deoxyribose, gulose, idose, talose, erythrulose, xylulose, psicose, turanose, cellobiose, glucosamine, mannosamine, fucose, fuculose, glucuronic acid, gluconic acid, ghicono-lactone, abequose, galactosamine, xylo- oligosaccharides (xylotriose, xylobiose and the like), gentio-oligoscaccharides (gentiobiose, gentiotriose, gentiotetraose and the like), galacto-oligosaccharides, sorbose, ketotriose (dehydroxyacetone), aldotriose (glyceraldehyde), nigero-oligosaccharides, fructooligosaccharides (kestose, nystose and the like), maltotetraose, maltotriol, tetrasaccharides, mannan-oligosaccharides, maltooligosaccharides (maltotriose, maltotetraose, maltopentaose, maltohexaose, maltoheptaose and the like), dextrins, lactulose, melibiose, raffinose, rhamnose, ribose, sucralose, potassium acesulfame, acesulfame acid and salts thereof, aspartame, alitame, saccharin and salts thereof, neohesperidin dihydrochalcone, cyclamate, cyclamic acid and salts thereof, neotame, advantame, glucosylated steviol glycosides (GSGs) and mixtures or combinations thereof

Examples of acidity modification agents include phosphoric acid, lactic acid, tartaric acid, citric acid, isocitric acid, gluconic acid, malic acid, fumaric acid, maleic acid, succinic acid, acetic acid, ascorbic acid, and their mixtures or associations.

Examples of additives also include carbohydrates, polyols, amino acids and their corresponding salts, poly-amino acids and their corresponding salts, sugar acids and their corresponding salts, nucleotides, organic acids, inorganic acids, organic salts including organic acid salts and organic base salts, inorganic salts, bitter compounds, flavoring ingredients, astringent compounds, proteins or protein hydrolysates, surfactants, emulsifiers, weighing agents, gums or polymers, antioxidants, colorants, flavonoids, alcohols, and their mixtures or associations.

Examples of flavoring ingredients include vanillin, vanilla extract, mango extract, cinnamon, citrus, coconut, ginger, viridiflorol, almond, menthol, grape skin extract, and grape seed extract, and their mixtures or associations.

Examples of gums or polymers include, but are not limited to, chitosan, pectin, pectic, pectinic, polyuronic, polygalacturonic acid, starch, food hydrocolloid or crude extracts thereof (e.g., gum acacia Senegal (Fibergum^{™}), gum acacia seyal, carageenan), alginates, and their mixtures or associations.

Suitable protein or protein hydrolysate additives include, but are not limited to, bovine serum albumin (BSA), whey protein (including fractions or concentrates thereof such as 90% instant whey protein isolate, 34% whey protein, 50% hydrolyzed whey protein, and 80%> whey protein concentrate), soluble rice protein, soy protein, protein isolates, protein hydrolysates, reaction products of protein hydrolysates, glycoproteins, and/or proteoglycans containing amino acids (e.g., glycine, alanine, serine, threonine, asparagine, glutamine, arginine, valine, isoleucine, leucine, norvaline, methionine, proline, tyrosine, hydroxyproline, and the like), collagen (e.g., gelatin), partially hydrolyzed collagen (e.g., hydrolyzed fish collagen), and collagen hydrolysates (e.g., porcine collagen hydrolysate), and their mixtures or associations.

Examples of surfactants additives include polysorbates (e.g., polyoxyethylene sorbitan monooleate (polysorbate 80), polysorbate 20, polysorbate 60), sodium dodecylbenzenesulfonate, dioctyl sulfosuccinate or dioctyl sulfosuccinate sodium, sodium dodecyl sulfate, cetylpyridinium chloride (hexadecylpyridinium chloride), hexadecyltrimethylammonium bromide, sodium cholate, carbamoyl, choline chloride, sodium glycocholate, sodium taurodeoxycholate, lauric arginate, sodium stearoyl lactylate, sodium taurocholate, lecithins, sucrose oleate esters, sucrose stearate esters, sucrose palmitate esters, sucrose laurate esters, and their mixtures or associations.

The composition of the beverage can be adjusted, for example by selecting the plant infusion intermediate composition(s), the optional additives and the amounts thereof, to provide a suitable taste and/or nutritional profile.

In one embodiment the beverage is adjusted to have a Brix index of from 0 to 10, preferably from 0 to 5, preferably from 0 to 3.

In one embodiment the beverage is adjusted to have an alkaline pH of from 7.0 to 9.0, or a neural pH of from 5.0 to 7.0, or an acidic pH of from 2.0 to 5.0, preferably of lower than 4.2.

Examples of beverage compositions include the following:

| Raw materials | Weight % in the final beverage composition |
|---|---|
| Mineral water | from 85 to 97 % |
| Sugar | from 0 to 8 % |
| Acidifier | from 0, 1 to 0, 7 % |
| Green tea infusion prepared according to step a) | from 3 to 15 % |
| Mint infusion prepared according to step a) | from 2 to 12 % |

| Raw materials | % in the final beverage composition |
|---|---|
| Mineral water | from 70 to 96 % |
| Sugar | from 2 to 8 % |
| Acidifier | from 0, 1 to 0, 7 % |
| Strawberry infusion prepared according to step a) | from 2 to 25 % |

### Packaging (step c))

In a further step the beverage is packaged in a sealed container. Such operations are known. The beverage is typically filled into a container and then the container is sealed with sealing means, such as caps, lids, flexible lids, or folding and/or sealing of walls of the container. The packaging step can be performed with preformed containers or according to a form fill seal process. The packaging step can comprise a treatment against pathogens, such as the treatments listed above. The packaging step can be performed under aseptic conditions. The packaging step can be a hot-fill step. The packaged beverage can alternatively treated in the packaging according to the retort process.

The container can be for example a glass bottle or cup, a metal can, a paper-based bottle or cup, a carton or brick, or a flexible pouch.

The container can be for example a container having a volume of from 20 to 30 cL, or from 30 to 40 cL, or from 40 to 60 cL, or from 60 to 80 cL, or from 80 to 110 cL, or from 110 to 130 cL, or from 130 to 160 cL, or from 160 to 180 cL, or from 180 to 220 cL,
or from 220 to 260 cL, preferably of 25 cL, or 33 cL, or 50 cL, or 75 cL, or 100 cL, or 125 cL, or 150 cL, or 175 cL, or 200 cL.

### Process of use

The beverage is typically to be consumed as a cold beverage, for example at room temperature or at a chilled temperature of from 1°C to 10°C. The beverage is typically drunk, by transferring is from the packaging to the mouth, optionally via a device such as a glass, a cup, a straw, and optionally via a beverage dispensing apparatus.

Some further details or advantage of the invention may appear in view of the following non limiting example(s).

### Example 1 - Preparation of infusions

### Protocol

The substrate and Volvic^{®} mineral water are poured in a mixing tank. The mixture is stirred from 200 to 800 rpm to rehydrate and/or unfreeze the substrate.
The ultrasound equipment is UIP2000hdT marketed by Hielscher, with a generator (frequency of 20 kHz, automatic frequency tuning system, power of 2000 Watts) a transducer, a booster (reference B4- 1.8 100 01453) and a sonotrode (reference: BS4d34 900 0142). The sonotrode is introduced in the mixture.
The ultrasound treatment is performed at a room temperature of 20-25°C, with a determined ultrasonication: energy applied (in Watt-Second) per gram of mixture. During ultrasonication, the stirring is maintained.
The generator is programmed to deliver a determined amount of ultrasonication energy to the amount of mixture. The ultrasonication is started and stops with the amount of ultrasonication energy has been delivered to the amount of mixture.
After the ultrasonication treatment results in a mixture of substrate in an infusion. The bottom of the tank is opened, the leaves and the infusion are drained down and sieved in order to separate the substrate on one side, and the infusion on the other side. The infusion is filtered or clarified before being transferred to a storage tank.

Various substrates are treated to obtain infusions. Substrates, treatment parameters, and infusions evaluations are reported in table 1 below.

**Table 1**

| Example | Example 1.1 Green Tea | Example 1.2 Mint | Example 1.3 Lemongrass | Example 1.4 Strawberry |
|---|---|---|---|---|
| Substrate | Dried Tea Leaves FINLAYS Ref: JFL/20/084 | Frozen Sweet Mint leaves DAREGAL Ref: 0000102 | IQF Lemongrass milled DAREGAL Ref: 1002184 | Frozen strawberry cubes CROPS Senga sengana Ref:12339 |
| Mixture (weight % of substrate in water) | 9% | 10% | 15% | 30% |
| Ultrasonication (Ws per g) | 35 Ws / gr | 20 Ws / gr | 30 Ws/gr | 35 Ws / gr |
| Infusion pH | 5.9 - 6.1 | 6.5 - 6.6 | 3 - 3.1 | 3.7 - 3.8 |
| Infusion Solids (%) | 1.2 - 1.4 | 0.15 - 0.25 | 0.25- 0.35 | 3.3 - 3.4 |
| Infusion Brix | 1.6 - 1.7 | 0.3 - 0.4 | 0.7 - 0.8 | 3.5 - 3.6 |

### Example 2 - Preparation of beverages

### Protocol

Into beaker add first mineral water (Volvic^{®}) then start stirring. During stirring add progressively granulated sugar and wait until dissolution, then add acidifier and at the end add infusion(s) weighted separately, to obtain a beverage.
The beverage is filled in bottles, and bottles are sealed with a screw cap and then pasteurized.

### Stability/Conservation test protocol:

Samples are placed in accelerated conditions so 37 °C, darkness, during 5 weeks. Each week samples are picked up to be compared from organoleptic point of view with equivalent samples placed in cold condition at 4°C, considered as "fresh products".
Each time so each week, expert panelist are checking difference and acceptability between aged and "fresh" final beverages. - Taste evolution (intensity - off notes), visual evolution (color), odor. The test is representative of shelf life of 6 months at ambient temperature.

### Organoleptic properties

The products are tasted by expert panelists. Main attributes are reported.

The formulations and evaluations are reported in Table 2 below.

**Table 2**

| Raw materials / Ingredients | Example 2.1 Green Tea / Mint | Example 2.2 Mint / Lemongrass | Example 2.3 Strawberry |
|---|---|---|---|
| Mineral water (%) Volvic^{®} | 89.29 | 91 | 78.9 |
| Sugar (%) | 2.97 | 0 | 4.23 |
| Concentrated lemon juice at 35 brix (%) | 0.25 | 0.035 | 0.64 |
| Infusion 1 (%) | 4.36 - Example 1.1 | 5.7 - Example 1.2 | 16.22 - Example 1.4 |
| Infusion 2 (%) | 3.12 - Example 1.2 | 3.2 - Example 1.3 | / |
| pH | 3.56 | 3.98 | 3.12 |
| Brix | 3.26 | 0.22 | 4.97 |
| Acidity (g of anhydrous citric acid per L) | 0.69 | 0.42 | 2.095 |
| Stability/Conservatio n result | No significant evolution. | No significant evolution. | No significant evolution. |
| Organoleptic properties | Light, fresh and natural taste, less saturating and more hydrating than a similar beverage prepared with powdered tea and mint / tea flavors | Light, fresh and natural taste, no saturating with not equivalent on the market | Light, fresh and natural taste, less saturating and more hydrating than a similar beverage prepared with strawberry juice and strawberry flavor. |

## Claims

1. A process of preparing a beverage with natural plant extracts, comprising the step of:
step a) preparing at least one plant infusion intermediate composition by a process comprising the steps of:
step a1) infusing a plant component substrate with an infusion water,
- at a temperature of up to 40 °C, preferably up to 25°C,
- at a weight ratio between the plant component and water of from 5/95 to 40/60,
- in presence of ultrasounds,
to obtain a plant infusion composition comprising the infusion water and plant extracted compounds, and the resulting plant component substrate,
step a2) separating the plant infusion composition from the resulting plant component substrate, and
step a3) optionally re-iterating steps a1) and a2) with fresh substrate and the plant infusion composition as infusion water,
step a4) optionally concentrating the plant infusion composition, with the proviso that the amount by weight in the plant infusion intermediate composition of plant extracted compounds is of lower than 10%, preferably lower than 5%,
to recover plant infusion intermediate composition,
step a5) optionally treating the plant infusion intermediate composition against pathogens,
step b) mixing the at least one plant infusion intermediate composition with an optionally carbonated water matrix and optionally additives different from the plant infusion intermediate composition, and optionally carbonating, to obtain an optionally carbonated beverage, and
Step c) packaging the beverage in a sealed container.

2. The process of claim 1, where the mixing of step b) is a direct mixing of the plant infusion intermediate composition, optionally after storage and/or transportation.

3. The process according to any of the preceding claims, wherein the plant component is a leaf, a root, a fruit, a vegetable, a berry or bean, a herb, a flower, or a component thereof, or their mixtures or associations.

4. The process according to claim 3, wherein the plant component is tea leaves, mint leaves, stevia leaves, coffee beans, whole fruits or fruit peels or pilled fruit, whole vegetable or vegetable peels or pilled vegetable, or their mixtures or associations.

5. The process according to any of the preceding claims, wherein the beverage comprises several plant extracts, comprising preparing several plant infusion intermediate compositions according the process of step a) and mixing them with the water matrix and optional additives according to step b).

6. The process according to any of the preceding claims, wherein the plant used in step a), or the infusion, is labelled as a prominent ingredient or flavor on the packaging.

7. The process according to claim 6 wherein all prominently labelled plants are plants used in step a), or the infusions, and mixed in step b).

8. The process according to any of the preceding claims, wherein the temperature in step a) is of from 5 °C to 25 °C, preferably from 10°C to 20°C.

9. The process according to any of the preceding claims, wherein the ultrasounds are applied with a frequency of from 18 to 30 kHz, and a power of from 100 W to 16000 W.

10. The process according to any of the preceding claims, wherein the ultrasounds are applied by introducing a sonotrode into the mixture of substrate and infusion water.

11. The process according to any of the preceding claims, wherein the ultrasounds are applied with an energy of from 10 Ws to 100 Ws per gram of mixture of substrate and infusion water.

12. The process according to any of the preceding claims, wherein the infusion water is a mineral water having a minerals concentration of from 100 mg/L to 2500 mg/L.

13. The process according to any of the preceding claims, wherein the water matrix is a mineral water having a minerals concentration of from 100 mg/L to 2500 mg/L.

14. The process according to any of the preceding claims, wherein:
- the infusion water is a mineral water having a minerals concentration of from 100 mg/L to 2500 mg/L, and
- the water matrix is a mineral water having a minerals concentration of from 100 mg/L to 2500 mg/L.

15. The process according to any of the preceding claims, wherein in step b) the mixing is performed at a weight ratio between the plant infusion intermediate composition and the water matrix of from 2/98 to 30/70.

16. The process according to any of the preceding claims, the optional additives are sugar ingredients, sweeteners, flavors, flavor modifiers, making agents, acidity modification agents, color modification agents, preservation agents, and mixtures or associations thereof.
